# EUROPEAN PATENT APPLICATION

(11) **EP 0 688 979 A1**
(43) Date of publication of application: **27.12.1995**
(21) Application number: 95201588.1
(22) Date of filing: 15.06.1995
(51) Int. Cl.: F16H 61/38

(54) **Transmission unit for motor vehicles**

(30) Priority: 21.06.1994 BE 9400591
(71) Applicant: VCST, naamloze vennootschap, B-3800 Sint-Truiden (BE)
(72) Inventor: Luyckx, Johan Louis, B-3740 Bilzen (BE)
(74) Representative: Donné, Eddy

(57) **Abstract**

Transmission unit for motor vehicles, of the type which at least consists of a primary pulley (3) on an ingoing shaft (4), a secondary pulley (5) on an outgoing shaft (6), an endless transmission element (7) between both pulleys (3-5), a primary pressure cylinder (8) which works in conjunction with the primary pulley (3), and a secondary pressure cylinder (9) which works in conjunction with the secondary pulley (5), characterized in that the ratio between the size of the active surface (37) of the pressure cylinder (8) with the largest active surface on the one hand, and the size of the active surface (38) of the pressure cylinder (9) with the smallest active surface on the other hand, has a value which is larger than "2".

## Description

The present invention concerns a transmission unit for motor vehicles, of the type which at least consists of a primary pulley on an ingoing shaft, a secondary pulley on an outgoing shaft, an endless transmission element between both pulleys, a primary pressure cylinder which works in conjunction with the primary pulley, and a secondary pressure cylinder which works in conjunction with the secondary pulley, whereby the pulleys and the pressure cylinders make it possible to continuously change the running radiuses of the endless transmission element on the pulleys, and consequently the transmission ratio.

It is known that with the present transmission units of the above-mentioned type, the pulleys are controlled by providing a liquid under pressure in the above-mentioned two pressure cylinders. The hydrostatic pressures prevailing in the primary and secondary pressure cylinders are regulated by a primary and secondary valve. Both valves form a series connection whereby the liquid is first guided to the secondary valve and only then to the primary valve, by means of a pump, which is driven by the combustion engine which drives the transmission unit. This series connection has for a result that the hydrostatic pressure in the primary pressure cylinder can never be larger than the hydrostatic pressure in the secondary pressure cylinder.

In order to make it possible, when necessary, to obtain a larger force at the primary pressure cylinder than at the secondary pressure cylinder, irrespective of the fact that the hydrostatic pressure in the primary pressure cylinder is always lower than the hydrostatic pressure in the secondary pressure cylinder, the active surface of the primary pressure cylinder will be in general two times as big as the active surface of the secondary pressure cylinder.

It is also known that with the current transmission units of the above-mentioned type, means are always provided in the secondary pressure cylinder to generate a permanent pinch force on the endless transmission element for situations whereby the hydrostatic pressure cannot be generated, for example because the pump is not driven. This situation may occur when a vehicle which is equipped with a transmission unit of the above-mentioned type must be towed.

These means usually consist of a helicoidal spring, which permanently exerts a force, and thus also during the normal working of the transmission unit. This spring force has for a result that the pinch force ratio on the endless transmission element does not correspond to the pressure ratio in combination with the active surfaces of the pressure cylinders, whereby the influence of the spring force increases as the absolute values of the pressures in the pressure cylinders decrease.

This presents a problem if the endless transmission element should follow a large running radius in the primary pulley and a small running radius in the secondary pulley, in other words if a small transmission ratio should be set.

In order to keep the fuel consumption of the vehicle as low as possible, it is important that this small transmission ratio is realized with pinch forces on the endless transmission element which are as small as possible, since unnecessary large pinch forces result in a lower efficiency of the transmission and consequently in a larger fuel consumption.

It is possible to provide for a precise pinch force modulation by means of an electronic control, but the interferences of the spring are very influential, so that the influence of these interferences must be minimized by using large pinch forces.

In general, the invention aims to exclude influences of interferences, so that a fine adjustment becomes possible without such large pinch forces being required. In particular, it aims to minimize the influence of the above-mentioned helicoidal spring.

To this end, the invention has a transmission unit for motor vehicles as an object, of the type which at least consists of a primary pulley on an ingoing shaft, a secondary pulley on an outgoing shaft, an endless transmission element between both pulleys, a primary pressure cylinder which works in conjunction with the primary pulley, and a secondary pressure cylinder which works in conjunction with the secondary pulley, whereby the ratio between the size of the active surface of the pressure cylinder with the largest active surface on the one hand, and the size of the active surface of the pressure cylinder with the smallest active surface on the other hand, has a value which is larger than "2".

Thus is obtained that the ratio between the two pinch forces is increased at the respective pulleys, but that the absolute pinch force remains comparatively small, as a result of which the adjustment of the continuously variable transmission can be more easily set, despite the small pinch forces applied, and consequently a fine adjustment by means of an electronic control no longer presents a problem.

Preferably, the above-mentioned ratio is situated between "2" and "3", and in the most preferred embodiment it is larger than "2.2".

The invention is particularly useful in embodiments which are provided with a pressure regulating circuit which contains at least two pressure regulating valves placed in series, whereby the first pressure regulating valve in this series connection works in conjunction with the pressure cylinder with the smallest active surface and whereby the second pressure regulating valve works in conjunction with the pressure cylinder with the largest active surface.

It is further very important in transmission units which contain means which provide a permanent pinch force, such as the above-mentioned helicoidal spring.

In order to better explain the characteristics of the invention, the following preferred embodiments are given as an example only, without being limitative in any way, with reference to the accompanying drawings, in which:
figure 1 shows a transmission unit according to the invention;
figure 2 shows a part of a variant of a transmission unit according to the invention.

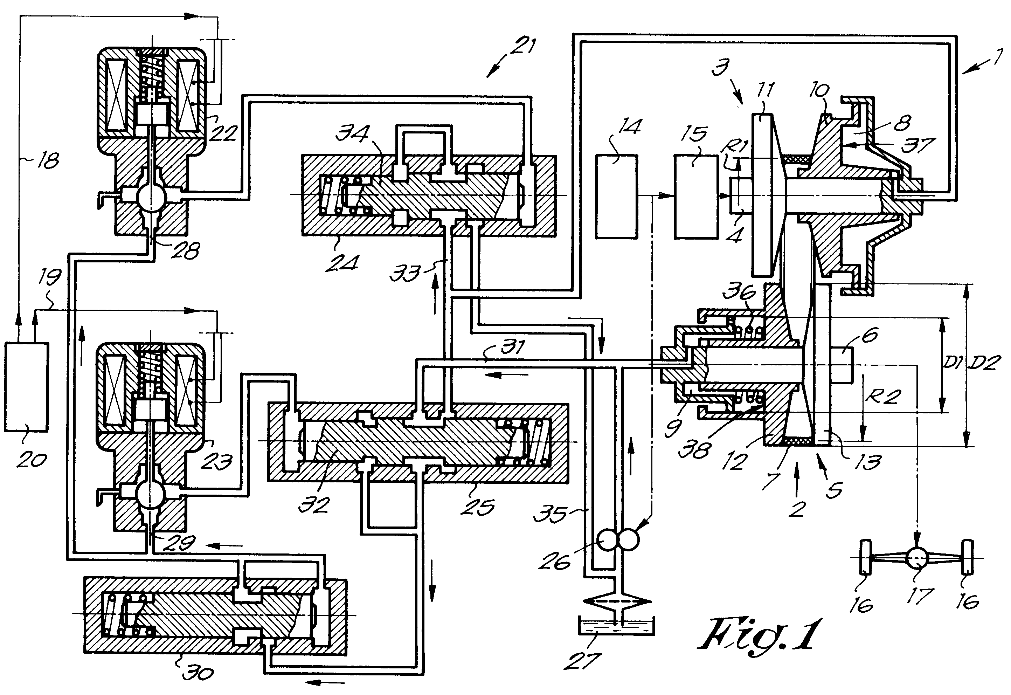

As represented in figure 1, the invention concerns a transmission unit 1 of the type which makes use of a continuously variable transmission 2.

The transmission unit 1 hereby at least consists of a primary pulley 3 on an ingoing shaft 4; a secondary pulley 5 on an outgoing shaft 6; an endless transmission element 7 between both pulleys 3 and 5, such as a belt; a primary pressure cylinder 8 which works in conjunction with the primary pulley 3; and a secondary pressure cylinder 9 which works in conjunction with the secondary pulley 5, whereby the pulleys 3 and 5 and the pressure cylinders 8 and 9 make it possible to change the running radiuses R1 and R2 of the endless transmission element 7 on the pulleys 3 and 5, and consequently the transmission ratio.

Each of the pulleys 3 and 5 are as is known V-shaped and they each have pulley halves 10-11 and 12-13 which can be axially moved in relation to one another. In the example shown, the pulley halves 10 and 12 can be axially moved in relation to the axially fixed pulley halves 11 and 13, by means of pressure cylinders 8 and 9.

As is further represented in figure 1, the ingoing shaft 4 is driven by the motor 14 of the vehicle, usually via a reversing unit 15 so as to be able to turn the drive. The outgoing shaft 6 provides for the drive of the wheels 16 via a number of transmissions which are not represented and a differential 17.

The transmission ratio of the continuously variable transmission 2 is adjusted as a function of different parameters. Hereby, the hydrostatic pressures in the pressure cylinders 8 and 9 are set as a function of control signals 18 and 19, emitted by a control unit 20, by means of a pressure regulating circuit 21.

The pressure regulating circuit 21 can be built up in different ways. As an example is represented a pressure regulating circuit 21 in figure 1 which consists of pulse-controlled electromagnetic valves 22 and 23, which are operated by the control signals 18 and 19, and which in turn operate a primary and secondary pressure regulating valve 24 and 25 respectively. The regulating device 19 is supplied by means of a pump 26 with hydraulic liquid coming from a reservoir 27. The pressure at the entries 28 and 29 of the valves 22 and 23 is maintained at a constant level by means of a pressure regulating valve 30.

The pressure regulating valves 24 and 25 are usually placed in series. Pumped-up liquid is hereby first supplied to the pressure regulating valve 25, via a pipe 31. Depending on the position of the valve disc 32 of this pressure regulating 25, part of the liquid is discharged to a greater or lesser degree via a pipe 33 and supplied to the pressure regulating valve 24. The liquid supplied thereto is then guided again, depending on the position of the valve disc 34 of the pressure regulating valve 24, to the suction side of the pump 26, via a pipe 35. The pipes 31 and 33 are connected to the pressure cylinders 9 and 8.

In order to make it possible to optimally set the force exerted by the primary pressure cylinder 8 as well as the force exerted by the secondary pressure cylinder 9, the first pressure cylinder 8 in this embodiment has a larger pressure surface than the secondary pressure cylinder 9. Thus, at any time, can be maintained a smaller pressure in the pipe 33 than in the pipe 31, which is necessary to realize the above-mentioned series connection of the pressure regulating valves 24 and 25 and in order to obtain that, if necessary, it is nevertheless possible to realize a larger force at the primary pressure cylinder 8 than at the secondary cylinder 9, irrespective of the fact that the pressure in the pipe 33 is always lower than that in the pipe 31.

The exact working of the pressure regulating circuit 21 is known as such and can moreover be easily derived from the accompanying figure 1; also, it is not further explained hereafter.

Further, the transmission unit 1 is also provided with means which provide for a permanent pinch force, such as the helicoidal spring 36 mentioned in the introduction.

The invention is special in that, in order to offer a solution to the disadvantages mentioned in the introduction, the ratio between the size of the active surface 37 of the pressure cylinder 8 with the largest active surface on the one hand, and the size of the active surface 38 of the pressure cylinder 9 with the smallest active surface on the other hand has a value which is larger than "2".

Preferably, this ratio is situated, as already mentioned, between "2" and "3", and in the most preferred embodiment it is larger than "2.2".

In order to obtain the above-mentioned ratio, the secondary pressure cylinder is preferably reduced in relation to the existing embodiments, as an enlargement of the primary pressure cylinder is disadvantageous for the total size of the transmission unit. Essentially, the pressure cylinder with the smallest active surface, in this case the pressure cylinder 9, preferably has an inner diameter D1 which is smaller than or equal to 0.7 times the diameter D2 of the accompanying pulley 5.

Moreover, in order to obtain optimal results, significantly larger hydrostatic pressures than those which are conventionally applied in the transmission units of the above-mentioned type, are preferably applied. According to the invention, hydrostatic pressures will be used whereby the maximum pressure is higher than 50 bar and preferably 68 to 70 bar.

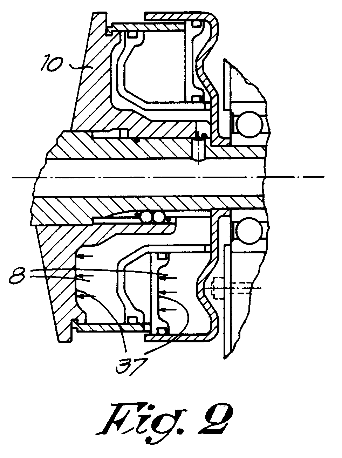

It should be noted that each active surface can be formed by several press-on surfaces, for example by making use of a double-acting primary pressure cylinder 8, as represented in figure 2. In the top half of this figure, the pressure cylinder 8 is placed in withdrawn position and in the lower half it is put under pressure.

The present invention is by no means restricted to the embodiments given as an example and represented in the accompanying drawings; on the contrary, such a transmission unit for motor vehicles can be made in various forms and dimensions while still remaining within the scope of the invention, as described in the accompanying claims.

## Claims

1. Transmission unit for motor vehicles, of the type which at least consists of a primary pulley (3) on an ingoing shaft (4), a secondary pulley (5) on an outgoing shaft (6), an endless transmission element (7) between both pulleys (3-5), a primary pressure cylinder (8) which works in conjunction with the primary pulley (3), and a secondary pressure cylinder (9) which works in conjunction with the secondary pulley (5), characterized in that the ratio between the size of the active surface (37) of the pressure cylinder (8) with the largest active surface on the one hand, and the size of the active surface (38) of the pressure cylinder (9) with the smallest active surface on the other hand, has a value which is larger than "2".

2. Transmission unit according to claim 1, characterized in that the above-mentioned ratio has a value between "2" and "3".

3. Transmission unit according to claim 1 or 2, characterized in that the above-mentioned ratio has a value between "2" and "4".

4. Transmission unit according to any of the preceding claims, characterized in that it is provided with a pressure regulating circuit (21) which contains at least two pressure regulating valves (24-25) placed in series, and in that the first pressure regulating valve (25) in this series connection works in conjunction with the pressure cylinder (9) with the smallest active surface, and in that the second pressure regulating valve (24) works in conjunction with the pressure cylinder (8) with the largest active surface.

5. Transmission unit according to any of the preceding claims, characterized in that it is provided with means which exert a permanent pinch force on the endless transmission element (7).

6. Transmission unit according to any of the preceding claims, characterized in that the active surface (38) of the secondary pressure cylinder (9) is smaller than that of the primary pressure cylinder (8).

7. Transmission unit according to claim 6, characterized in that the inside diameter (D1) of the pressure cylinder (9) with the smallest active surface is smaller than or equal to 0.7 times the diameter (D2) of the accompanying pulley (5).

8. Transmission unit according to any of the preceding claims, characterized in that the maximum hydrostatic pressure used herein is higher than 50 bar.

9. Transmission unit according to claim 8, characterized in that the above-mentioned hydrostatic pressure is 68 to 70 bar.

10. Transmission unit according to any of the preceding claims, characterized in that it is provided with a double-acting primary pressure cylinder.
